(19) Europäisches Patentamt
European Patent Office
Office européen des brevets

(11) **EP 1 913 342 B1**

(12) **EUROPEAN PATENT SPECIFICATION**

(45) Date of publication and mention
of the grant of the patent:
**04.12.2019 Bulletin 2019/49**

(21) Application number: **06765206.5**

(22) Date of filing: **03.08.2006**

(51) Int Cl.:
***G01F 1/66*** (2006.01)

(86) International application number:
**PCT/GB2006/002902**

(87) International publication number:
**WO 2007/020378 (22.02.2007 Gazette 2007/08)**

(54) **LOW POWER ULTRASONIC FLOW MEASUREMENT**

ULTRASCHALL-STRÖMUNGSMESSUNG MIT GERINGEM STROMVERBRAUCH

MESURE DE FLUX ULTRASONORE DE FAIBLE PUISSANCE

(84) Designated Contracting States:
**AT BE BG CH CY CZ DE DK EE ES FI FR GR HU
IE IS IT LI LT LU LV MC NL PL PT RO SE SI SK TR**

(30) Priority: **13.08.2005 GB 0516752
28.07.2006 GB 0615120**

(43) Date of publication of application:
**23.04.2008 Bulletin 2008/17**

(73) Proprietor: **Flownetix Limited
Birmingham B16 8PE (GB)**

(72) Inventor: **RHODES, Simon John
Maidenhead, Berkshire SL6 4DT (GB)**

(74) Representative: **Boult Wade Tennant LLP
Salisbury Square House
8 Salisbury Square
London EC4Y 8AP (GB)**

(56) References cited:
**EP-A- 1 111 349      WO-A2-96/29575
GB-A- 2 266 373      GB-A- 2 294 138**

**Description**

FIELD OF THE INVENTION

The present invention relates to a method of ultrasonic flow measurement for measuring a flow speed of a fluid in a conduit, and to an ultrasonic flow meter for measuring a flow speed of a fluid in a conduit.

BACKGROUND OF THE INVENTION

Ultrasonic flow meters are well known and generally fall into two categories, namely transit time ultrasonic flow meters and Doppler ultrasonic flow meters.

An example of transit time ultrasonic flow meter is given in patent document GB 2 266 373 A.

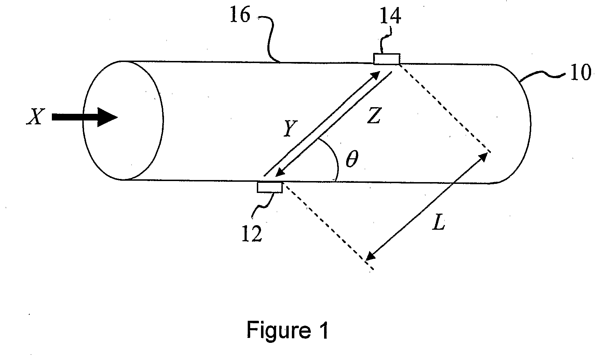

Figure 1 illustrates the operation of a typical transit time ultrasonic flow meter for measuring the flow of a fluid through a pipe 10. A direction of flow of the fluid is shown by arrow X. The ultrasonic flow meter employs a pair of ultrasonic transducers 12 and 14 attached to an external surface 16 of the pipe 10. The transducers 12 and 14 are placed on opposite sides of the pipe 10 a distance $L$ apart, with the first transducer 12 in an upstream position and the second transducer 14 in a downstream position.

To make a downstream flow measurement, a downstream ultrasonic signal $Y$ is emitted from the upstream transducer 12 towards the downstream transducer 14 at an angle $\theta$ to the direction of flow $X$. A transit time $t_d$ for the downstream signal $Y$ to reach the downstream transducer 14 is measured.

Similarly, to make an upstream flow measurement, an upstream ultrasonic signal $Z$ is emitted from the downstream transducer 14 towards the upstream transducer 12 at an angle $\theta$ to the direction of flow $X$. A transit time $t_u$ for the upstream signal $Z$ to reach the upstream transducer 12 is measured.

The transit times $t_u$ and $t_d$ are given by:

$$t_u = \frac{L}{c + v\cos\theta} \tag{1}$$

$$t_d = \frac{L}{c - v\cos\theta} \tag{2}$$

where c is the speed of sound in the fluid and v is the flow speed. A transit time difference $\Delta t$ is then given by:

$$\Delta t = t_u - t_d = \frac{2vL\cos\theta}{c^2 - v^2\cos^2\theta} \tag{3}$$

Usually the speed of sound is much larger than the flow speed (i.e. $v \ll c$). For example, pure water at 20°C has a sound speed of 1482 ms$^{-1}$ as compared to a typical flow speed of 0.01 to 4 ms$^{-1}$. Therefore, Equation (4) approximates to:

$$\Delta t \approx \frac{2vL\cos\theta}{c^2} \tag{4}$$

$$\Rightarrow \quad v \approx \frac{c^2\Delta t}{2L\cos\theta} \tag{5}$$

Furthermore, the speed of sound may be calculated from an average of the upstream and downstream transit times $t_u$ and $t_d$:

$$t_{av} = \frac{t_u + t_d}{2} = \frac{Lc}{c^2 - v^2 \cos^2 \theta} \approx \frac{L}{c} \qquad (6)$$

$$\Rightarrow \qquad c \approx \frac{L}{t_{av}} \qquad (7)$$

Thus, substituting Equation (7) into Equation (5), the flow speed may be calculated from the measured transit times as follows:

$$v \approx \frac{L\Delta t}{2t_{av}^2 \cos \theta} \qquad (8)$$

Ultrasonic flow meters can be implemented in many ways. Most commonly they are used in industrial applications where alternative measurement technologies cannot be used or where high performance is required. However, such industrial ultrasonic flow meters are not suitable for high volume production or consumer markets due to their physical constraints, power consumption or cost of manufacture.

The object of this invention is to overcome the constraints of industrial ultrasonic flow meters and to provide a method and system of ultrasonic flow measurement that can operate at low power. In particular, it is desired to provide a system which can operate from a battery for up to 10 years and can be manufactured at low cost.

SUMMARY OF THE INVENTION

According to a first aspect of the present invention, there is provided a method of ultrasonic flow measurement as recited in claim 1.

According to a second aspect of the present invention, there is provided an ultrasonic flow meter as recited in claim 16.

Thus, the present invention provides a method and apparatus for low power ultrasonic flow measurement which enables a user to determine a flow speed and direction of a fluid in a conduit, and to determine periods of gas flow in a liquid flow meter or wet periods in a gas flow meter. Furthermore, the present invention enables statistical analysis to improve accuracy and performance, and provides continuous correction for changes in fluid viscosity and temperature. Furthermore, the present invention enables automatic self-testing of the ultrasonic flow meter, as well as automatic calibration, self checking and correction for drift in circuit components.

Other preferred features of the present invention are set out in the appended claims.

BRIEF DESCRIPTION OF THE DRAWINGS

An embodiment of the present invention will now be described by way of example with reference to the accompanying drawings in which:

Figure 1 illustrates the operation of a typical transit time ultrasonic flow meter for measuring the flow of a fluid through a pipe;
Figure 2 is a schematic representation of an ultrasonic flow meter according to an embodiment of the present invention;
Figure 3 shows the timings of part of an ultrasonic flow measurement cycle; and
Figures 4a and 4b show transmitted and received signals as well as an output signal from a phase comparator.

DETAILED DESCRIPTION OF A PREFERRED EMBODIMENT

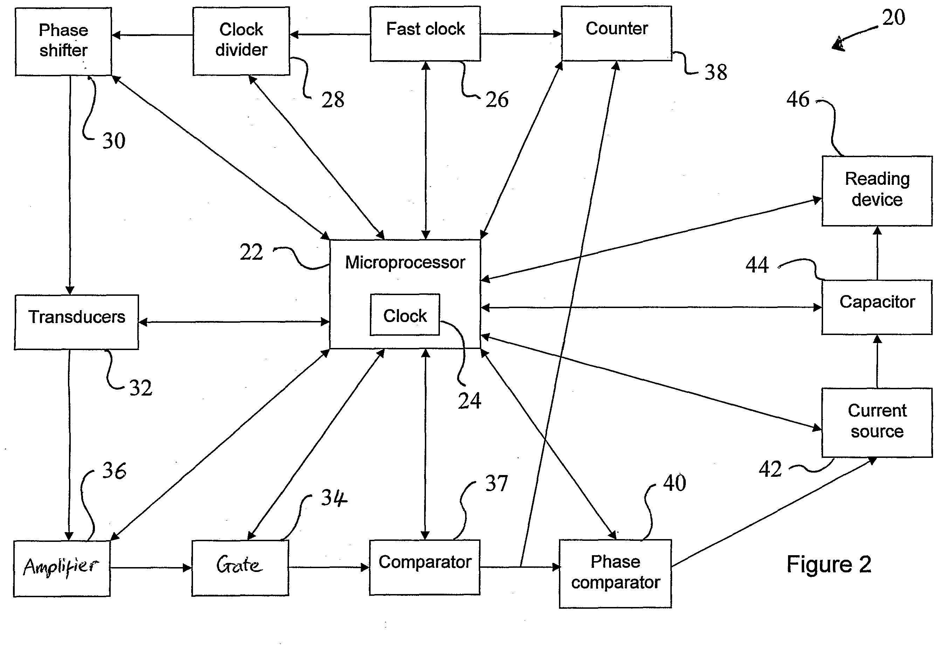

Figure 2 is a schematic representation of an ultrasonic flow meter 20 according to an embodiment of the present invention. The ultrasonic flow meter 20 may be used for measuring a flow rate of a fluid in a conduit.

The ultrasonic flow meter 20 comprises a low power microprocessor 22 which has an internal clock 24. The internal clock circuit uses an external low frequency crystal oscillator to ensure stability over time and temperature, a 32kHz watch crystal is typically used. In alternative embodiments, the clock 24 need not be internal to the microprocessor. The ultrasonic flow meter further comprises a fast clock 26, a clock divider 28, a phase shifter 30, an array of ultrasonic transducers 32, a gate 34, an amplifier 36, a comparator 37, a counter 38, a phase comparator 40, a current source 42, a capacitor 44, and a reading device 46. The microprocessor 22 is the heart of the system and controls the timing of all the various steps in the ultrasonic measurement process. The microprocessor 22 is therefore directly or indirectly connected to all of the ultrasonic flow meter components mentioned above.

The array of ultrasonic transducers 32 is arranged as in the prior art such that transducers in the array 32 can transmit signals through the fluid and receive the transmitted signals. The array 32 comprises at least one pair of ultrasonic transducers, each pair together forming a respective transmitter-receiver pair. Preferably, each transducer in the pair may receive and transmit ultrasonic signals. However, it is also envisaged that separate transducers may be provided for the transmitting and receiving functions. As in the prior art, a transducer pair may be affixed on opposite sides of an external surface of the conduit, with one transducer in an upstream position and one transducer in a downstream position. Thus, a pair of upstream and downstream transit time measurements will enable a flow speed of the fluid in the conduit to be calculated. The array of ultrasonic transducers 32 may be connected to the microprocessor 32 via a multiplexer that allows any transducer to be connected to a transmitter or receiver circuit at any time in any combination.

In use, the ultrasonic flow meter 20 has two operating states: an active state in which ultrasonic flow measurement cycles are performed, and a passive state. The ultrasonic flow meter uses very little power in the passive state such that an amount of power used by the ultrasonic flow meter in the passive state is less than an amount of power used in the active state. Preferably, an amount of power used by the ultrasonic flow meter in the passive state is at least one order of magnitude less than an amount of power used in the active state. More preferably, an amount of power used by the ultrasonic flow meter in the passive state is at least two orders of magnitude less than an amount of power used in the active state. More preferably, an amount of power used by the ultrasonic flow meter in the passive state is at least three orders of magnitude less than an amount of power used in the active state.

For a majority of the time, the ultrasonic flow meter 20 is in the passive state in which various components (including the fast clock 26, amplifier 36, and the reading device 46) have been disabled by a disable signal from the microprocessor 22. These various components are preferably chosen such that they draw very little current when disabled. The internal clock 24 runs at ultra low power in both the active and passive states of the ultrasonic flow meter 20.

At time intervals $T1$, the internal clock 24 sends an interrupt signal to the microprocessor 22. On receiving the interrupt signal at time $t_1$, the microprocessor 22 switches the ultrasonic flow meter 20 from the passive state to the active state to perform an ultrasonic flow measurement cycle.

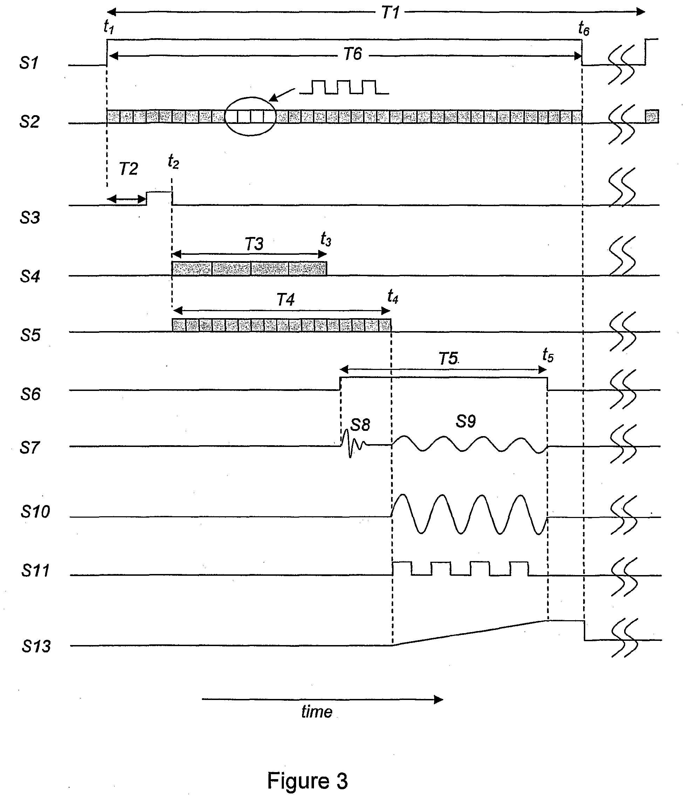

As shown in Figure 3, at the start of the ultrasonic flow measurement cycle, the microprocessor 22 sends an enable signal $S1$ to the fast clock 26 at time $t_1$. On receiving the enable signal $S1$ at time $t_1$, the fast clock 26 starts to output a fast clock signal $S2$ having a frequency and period of the fast clock 26. The frequency of the fast clock 26 is higher than a resonant frequency of the transducers in the array 32.

There is then a stabilisation delay $T2$ to allow the microprocessor 22 and the fast clock 26 to stabilise. Preferably, the microprocessor 22 and the fast clock 26 start in less than 10 $\mu$s, which is considerably faster than a typical crystal oscillator start-up period of between 100 ms and 10 s. After the stabilisation delay $T2$, the microprocessor 22 sends a clear signal $S3$ clocked by the fast clock 26. The clear signal $S3$ has a number of effects at time $t_2$.

Firstly, the microprocessor clear signal $S3$ resets and activates the clock divider 28 at time $t_2$. Thus, the clock divider 28 starts to obtain an input signal $S2$ from the fast clock 26 at the fast clock frequency. The clock divider 28 acts to divide down the input signal so as to start to provide a digital output signal $S4$ at the (lower) resonant frequency of the transducers in the array 32.

Secondly, the microprocessor clear signal $S3$ resets and activates the phase shifter 30 at time $t_2$. In particular, the phase shift of the phase shifter 30 is set to zero, and the output signal $S4$ of the clock divider 28 is passed through the phase shifter 30 to the transducer array 32. Since the phase shift is zero, it will be appreciated that the phase shifter 30 is only optional at this stage. Instead, at time $t_2$, the output signal $S4$ of the clock divider 28 could be passed directly to the transducer array 32.

Thirdly, at time $t_2$, the microprocessor 22 enables a transmitting transducer in the array 32 to transmit the signal $S4$ received from the phase shifter 30 to its corresponding receiving transducer. The signal S4 is transmitted at the transducer frequency. Optionally, multiple pairs of transducers may be in use depending on the application. Thus, the transmitted signal $S4$ may be simultaneously transmitted by more than one transmitting transducer in some applications.

Finally, the microprocessor clear signal $S3$ resets and starts the counter 38 at time $t_2$. A count S5 of the counter 38 is clocked by the fast clock 26.

At time $t_3$, the microprocessor 22 sends a signal to the transducer array 32 to terminate transmission of the signal $S4$ by the transmitting transducer. Thus, the transmitted signal $S4$ has a finite duration $T3$ given by $T3=t_3-t_2$. The finite duration $T3$ is calculated by the microprocessor such that it is shorter than a minimum expected transit time of the signal from the transmitting transducer to the receiving transducer.

Shortly before the transmitted signal $S4$ is due to arrive at the receiving transducer based on the fastest fluid sound speed expected, the microprocessor 22 sends a signal $S6$ to the transducer array 32 to activate the receiving transducer. Signal $S6$ is simultaneously sent from the microprocessor 22 to the amplifier 36 in order to activate the amplifier 36 at this time.

The received signal *S7* is made up of an initial part comprising spurious signals *S8* and a later part comprising a received version *S9* of the transmitted signal *S4* at the transducer frequency. The received signal *S7* is passed to an amplifier 36. The amplifier 36 includes a filter (not shown) which allows only signals at the transducer frequency to pass. This filtered signal is then amplified by the amplifier 36 to produce an amplified signal. The amplifier 36 is designed to operate over a wide range of signal levels while preserving the correct phase and frequency of the incoming signal *S9.*

The spurious signals *S8* are due to powering up the receiver chain. Therefore, in order to remove the spurious signals *S8,* the received signal is passed through a gate 34 after being passed through the amplifier 36. The gate 34 acts as a switch by using a simple gating function to prevent signals early in the receiving cycle from triggering a measurement. Thus, under the control of the microprocessor 22, the gate 34 inhibits the initial part of the received signal *S7,* and the signal output by the gate 34 is simply an amplified version of signal *S9* (the received version of the transmitted signal *S4*).

The amplified gated signal *S10* is next passed through a comparator 37 to produce a digital version *S11* of the amplified signal *S10.* The digital signal *S11* is used in a number of ways, as described below.

Firstly, the digital signal *S11* is used to stop the counter 38. In particular, the first edge (rising or falling) of the digital signal *S11* stops the counter 38 at time $t_4$. Thus, the counter 38 provides a measurement of the transit time of the transmitted signal *S4* between the transmitting and receiving transducers. Since the counter 38 is clocked by the fast clock 26, the counter 38 measures the transit time to the nearest fast clock period. The measured transit time T4 is given by $T4 = t_4 - t_2$.

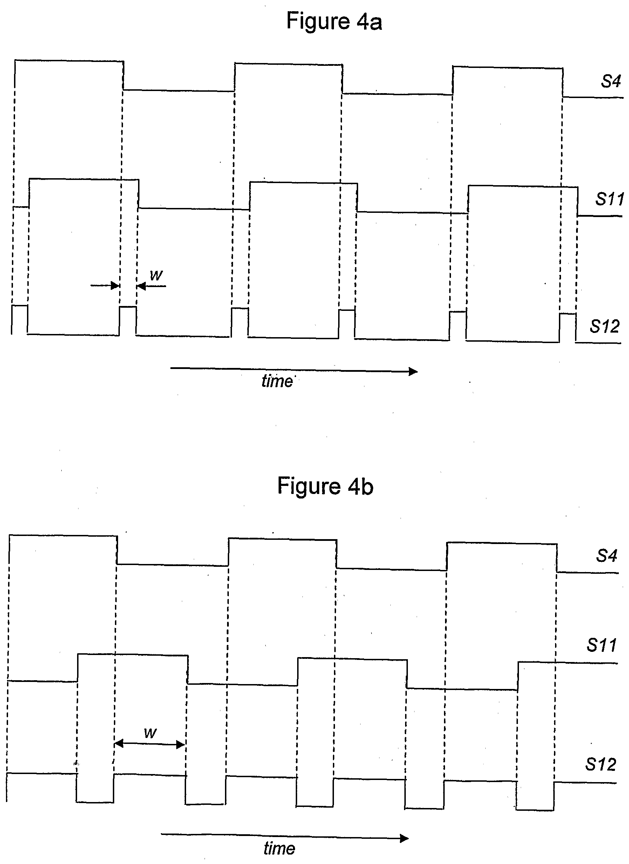

In addition, the digital signal *S11* is used as one of the inputs into the phase comparator 40. The other input into the phase comparator 40 is a non-terminated reference version of the digital transmitted signal *S4.* As shown in Figure 4, the phase comparator 40 acts to compare the phases of the two input signals *S4* and *S11* so as to provide a pulsing output signal *S12.*

Looking at Figure 4, a phase difference between the transmitted and received signals is relatively small in Figure 4a, and is larger in Figure 4b. The pulsing output signal *S12* rises on a rising or falling edge of the digital transmitted signal S4, and falls on a rising or falling edge of the digital (received) signal *S11.* A pulse width *w* of the pulsing output signal *S12* varies in dependence upon the phase difference between the digital transmitted signal S4 and the digital (received) signal *S11.* Thus, the pulse width w is smaller in Figure 4a and larger in Figure 4b.

In a preferred embodiment (not shown in Figure 4), the pulsing signal *S12* for a first ultrasonic flow measurement is created based on the rising edges of the signals S4 and *S11,* and then, for the next ultrasonic flow measurement, the pulsing signal S12 is created based on the falling edges of the signals *S4* and *S11.* This approach of using alternate rising and falling edges allows the cancellation of effects caused by any slight changes in the shape, quality or frequency of the received signal S9, whereas there is the possibility of an offset error if only one edge is used.

The pulsing signal *S12* is used to gate the current source 42 which provides a constant current with which to charge the capacitor 44. As the capacitor 44 is charged, a voltage S13 builds up on the capacitor 44. The voltage *S13* is related to the phase difference between the two signals *S4* and *S11.*

At time $t_5$, the microprocessor 22 deactivates the transducers in the array 32. Similarly, all of the other components (except the internal clock 24, the capacitor 44 and the reading device 46) are deactivated by the microprocessor 22 at this time.

After the capacitor 44 has finished charging, the microprocessor instructs the reading device 46 to read the voltage. The reading device 46 may be an analogue-to-digital converter (ADC) such as a 16-bit ADC. This gives a very high resolution measurement of the voltage, which is related to the phase difference.

To further improve the phase shift measurement technique described above, an extra phase shift can be included by adjusting the phase of the transmitted signal *S4.* This extra phase shift is introduced by a phase shifter (not shown) before the transmitted signal *S4* is fed into the phase comparator 40. The idea of this extra phase shift is to roughly adjust the phase shift such that there is a phase shift of approximately 180° at zero flow where the phase difference is zero. This means that, at zero flow, the measured voltage is approximately in the centre of the voltage range that could be produced by charging the capacitor. As the flow increases, the voltage obtained in one flow direction will increase, and the voltage obtained in the other flow direction will decrease by roughly the same amount. Based on the expected flow rates, the system is designed such that the phase difference measurements stay away from 0° and 360° to avoid wrap-around problems.

Once the voltage has been read, the capacitor 44 is discharged at time $t_6$. The reading device 46 is also shut down at this time. All of the other components (except the microprocessor 22 and the internal clock 24) have been shut down previously. The microprocessor continues to operate for a short period to carry out mathematical functions using the measured values. In particular, the voltage measurement and the counter transit time measurement are then combined to give a more accurate measurement of the signal transit time.

This completes one measurement. However, as described in the background section, at least a pair of measurements (an upstream measurement and a downstream measurement) is required to determine the flow speed. Figure 3 only shows the first measurement in a pair of measurements. However, it will be appreciated that the second measurement can be made in substantially the same way with the receiving and transmitting transducers swapped around.

Furthermore, a single measurement pair is unlikely to give an accurate result on its own. In general, the short sample time and the presence of particles and/or air bubbles in the fluid mean that a statistical history of previous measurements is required in order to filter, correct and damp the results to give accuracy and a usable output. Typically a measurement will be averaged with previous ones to damp out changes. In addition, a measurement that differs significantly from those around it will be rejected, as will a measurement where the received signal differs in timing or amplitude from those around it. In practise this results in a very stable average even when the input conditions are not ideal.

Once the required readings have been taken and the microprocessor has performed the required mathematical functions, an ultrasonic flow measurement cycle is complete. Therefore, the microprocessor 20 switches the ultrasonic flow meter 20 from the active state to the low power passive state.

Preferably, a period of time $T6$ taken to complete an ultrasonic flow measurement cycle is less than half of the time interval $T1$. Therefore, the ultrasonic flow meter is in the active state for less than half of the time, and therefore draws less power.

Preferably, the interval $T1$ is less than an expected timescale for a significant change in the flow rate. Thus, the ultrasonic flow meter 20 gives apparently continuous operation.

Preferably, the period of time $T6$ taken to complete an ultrasonic flow measurement cycle is between about 20 $\mu s$ and 200 $\mu s$ and the time $T1$ interval is between about 1 ms and 100 ms.

In preferred embodiments, the time interval $T1$ is 2.5, 7.5, 15 or 30 ms. However, alternative values may be used depending on the desired average power consumption of the ultrasonic flow meter 20.

The timings described in this embodiment are typical for a system using 2 MHz transducers across 50 mm of water. However, it will be appreciated that this embodiment is purely illustrative and the timings and digital logic functions may be easily adjusted to any frequency or pipe size and fluid type required.

Preferably, the amount of power used by the ultrasonic flow meter in the passive state is at least a hundred times smaller than the amount of power used in the active state. More preferably, the amount of power used by the ultrasonic flow meter in the passive state is less than about 100 $\mu W$ and the amount of power used in the active state is between about 10 mW and 100 mW.

In a preferred embodiment of the ultrasonic flow meter 20, an average current consumption of 60 $\mu A$ or less is possible, giving 10 years operation from a typical Lithium C cell. For example, for an ultrasonic flow meter 20 having a interval $T1$ of 30 ms and a measurement period $T6$ of 65 $\mu s$, with a static current of 12 $\mu A$ or less during the passive state of the ultrasonic flow meter 20 and an operating current of 20 mA during the active state of the ultrasonic flow meter 20, an average operating current is 55 $\mu A$. A typical meter will operate to $\pm2\%$ accuracy over a temperature range from 0°C to 85°C.

An ultrasonic flow meter according to an embodiment of the present invention can be used as the basis for an ultrasonic flow measurement system that, by modifying the software parameters, can be used for a wide range of temperatures, for a wide range of flow rates regardless of pipe size, for a wide range of pipe sizes regardless of flow rate, and across any number of sonically conductive fluids.

A number of application issues need to be addressed in order to ensure continued accuracy of the ultrasonic flow meter across the range of applications likely to be encountered.

The first of these application issues is the ability to correct for changes in process fluid, temperature or viscosity. In practise, due to the transit time method used, the only physical effect on the measured transit time is due to changes in the sound speed of the fluid (which can be affected by any of the previously mentioned physical changes). Therefore, the sound speed of the fluid may be calculated by taking the average of at least one pair of upstream and downstream timing measurements to remove the effect due to flow as in Equation (7). Therefore, a flow speed calculated according to Equation (8) is independent of changes in process fluid, temperature and viscosity.

Another application issue relates to the use of the capacitor 44 in the determination of the phase difference. The analogue components, such as the capacitor 44, can be particularly sensitive to component tolerance, temperature drift and aging. In order to prevent this affecting the measurement result, the ultrasonic flow meter 20 is preferably able to be run in a test mode. In this test mode, the phase shifter 30 is used to create two signals: a reference transmitted signal and a phase-shifted version of that reference signal. These two signals are then used as the inputs to the phase comparator 40. In other words, a phase-shifted version of the reference transmitted signal is used as the received signal. The phase comparator 40, current source 42, capacitor 44 and reading device 46 are then used to measure the voltage on the capacitor 44, from which it is possible to calculate a measured phase difference. This measured phase difference may then be compared with the actual known phase difference imposed by the phase shifter 30. Any difference in the measured and actual values of the phase difference may then be used to correct for changes in the analogue circuit.

The ultrasonic flow meter 20 can operate a complete self check by routing the transmitted signal directly to the receiving transducer. This routing may be done, for example, using the multiplexer. Using the analogue component testing method described above, the ultrasonic flow meter 20 is able to determine its own performance without using the flowing fluid. In the event of drifts from the expected results, a correction factor may be applied. Preferably, in the event of drifts larger than a specified acceptable level, the ultrasonic flow meter 20 can inform a user and shut down to avoid incorrect measurements.

A further application issue relates to the problem of gas in a liquid tube (or liquid in a gas tube). In such a case, the ultrasonic signal may be attenuated whilst travelling from the transmitting transducer to the receiving transducer. To lessen this problem, the ultrasonic flow meter may be operable to measure an amplitude of the received signal, and, if the measured amplitude is below a predetermined threshold for a predetermined number of measurements, then the length of the time interval may be increased. This results in power saving for long periods of attenuated signal.

Yet another application issue relates to the fast clock 26. The fast clock circuit uses a fast starting, temperature and time stable oscillator to ensure continued accuracy. Periodically the performance of this oscillator may be tested in a fast clock test step in which the counter 38 is used to measure the number of fast clock periods for a specific number clock periods of the internal clock 24. As mentioned previously, the internal clock circuit uses an external low frequency crystal oscillator, such as a 32kHz watch crystal, to ensure stability over time and temperature. Deviations from the calibrated condition may then be corrected for.

For improved accuracy, additional pairs of ultrasonic transducers operable to transmit signals through the fluid and to receive the transmitted signals may be provided. In such an embodiment, multiple transducer pair measurements can be processed and weighted to offer improved flow information, or multiple transducer pairs can be operated at different frequencies to give improved performance at lower flows or improved ultrasonic transmission. A typical example of this would be for an ultrasonic flow meter for measuring the flow in a large bore where daytime use is likely to be higher but more variable, but a lower operating range is required for night time usage where flows are more stable but very low. In this case, a set of transducers would be used to determine the flow for 10-100% of the designed range with a second set with better sensitivity when the flow is below 10% of the expected range.

Although a preferred embodiment of the invention has been described, it is to be understood that this is by way of example only and that various modifications may be contemplated.

Claims

1.  A method of ultrasonic flow measurement for measuring a flow rate of a fluid in a conduit, the method comprising:

    providing an ultrasonic flow meter (20) comprising a microprocessor (22), a clock (24), a fast clock (26), and a pair of ultrasonic transducers (32) operable to transmit signals through the fluid at a resonant frequency of the transducers and at an angle other than 90 degrees to a predominant direction of flow, the ultrasonic transducers further operable to receive the transmitted signals;
    switching the ultrasonic flow meter from a passive state to an active state at time intervals measured by the clock, an amount of power used by the ultrasonic flow meter in the passive state being less than an amount of power used by the ultrasonic flow meter in the active state;
    performing an ultrasonic flow measurement cycle by making at least one pair of ultrasonic flow measurements, wherein a pair of ultrasonic flow measurements comprises an upstream ultrasonic flow measurement and a downstream ultrasonic flow measurement, and wherein making an ultrasonic flow measurement comprises:

        (a) transmitting and receiving an ultrasonic signal, the ultrasonic signal having an associated transit time to travel from one ultrasonic transducer to the other;
        (b) measuring the transit time with a counter (38) clocked by the fast clock;
        (c) comparing the phases of the transmitted (S4) and received (S11) signals by providing a pulsing signal (S12) which rises on a rising or falling edge of the transmitted signal and falls on a rising or falling edge of the received signal such that the pulsing signal has a pulse width (w) which varies in dependence upon a phase difference between the transmitted and received signals;
        (d) charging a capacitor (44) using the pulsing signal;
        (e) measuring a voltage on the capacitor; and
        (f) calculating the flow rate based at least partially upon the measured transit time as adjusted based upon the measured voltage; and

    switching the ultrasonic flow meter from the active state to the passive state following completion of an ultrasonic flow measurement cycle.

2.  The method of claim 1 in which making an ultrasonic flow measurement further comprises a step of amplifying at least a part of the received signal prior to the phase comparison step, a phase of the amplified signal being the same as a phase of the received signal.

3. The method of claim 1 or claim 2 in which the phase of the transmitted signal is adjusted prior to the phase comparison step, such that a result of the phase comparison step is approximately 180° at zero flow rate.

4. The method of any preceding claim in which making an ultrasonic flow measurement further comprises a step of discharging the capacitor.

5. The method of any preceding claim in which performing an ultrasonic flow measurement cycle further comprises:

   calculating a speed of sound in the fluid based at least partially upon an average transit time of at least one pair of ultrasonic flow measurements; and
   calculating the flow rate based at least partially upon the calculated sound speed.

6. The method of any of claims 2 to 5 in which performing an ultrasonic flow measurement cycle comprises:

   making a plurality of pairs of ultrasonic flow measurements;
   averaging the transit times of the plurality of upstream ultrasonic flow measurements to provide an average upstream transit time; and
   averaging the transit times of the plurality of downstream ultrasonic flow measurements to provide an average downstream transit time.

7. The method of any of claims 2 to 5 in which performing an ultrasonic flow measurement cycle comprises:

   making a plurality of pairs of ultrasonic flow measurements;
   calculating a plurality of flow rates, each calculated flow rate being based at least partially upon a respective pair of ultrasonic flow measurements; and
   averaging the plurality of calculated flow rates to provide an average flow rate.

8. The method of any preceding claim further comprising a test measurement step in which a phase-shifted version of the transmitted signal is used as the received signal.

9. The method of any preceding claim further comprising a fast clock test step.

10. The method of any preceding claim further comprising the steps of:

    measuring an amplitude of the received signal; and
    increasing a length of said time interval if the measured amplitude is below a predetermined threshold for a predetermined number of measurements.

11. The method of any preceding claim further comprising providing additional pairs of ultrasonic transducers operable to transmit signals through the fluid and to receive the transmitted signals.

12. The method of any preceding claim in which the period of time taken to complete an ultrasonic flow measurement cycle is between about 20 $\mu$s and 200 $\mu$s and said time interval is between about 1 ms and 100 ms.

13. The method of any preceding claim in which said interval is less than an expected timescale for a significant change in the flow rate.

14. The method of any preceding claim in which the amount of power used by the ultrasonic flow meter in the passive state is at least a hundred times smaller than the amount of power used in the active state.

15. The method of any preceding claim in which the amount of power used by the ultrasonic flow meter in the passive state is less than about 100 $\mu$W and the amount of power used in the active state is between about 10 mW and 100 mW.

16. An ultrasonic flow meter (20) for measuring a flow rate of a fluid in a conduit, the ultrasonic flow meter having an active state in which ultrasonic flow measurement cycles are performed and a passive state, an amount of power used by the ultrasonic flow meter in the passive state being less than an amount of power used by the ultrasonic flow meter in the active state, the ultrasonic flow meter comprising:

a pair of ultrasonic transducers (32) operable to transmit signals through the fluid at a resonant frequency of the transducers and at an angle other than 90 degrees to a predominant direction of flow, the ultrasonic transducers further operable to receive the transmitted signals, the signals having associated transit times to travel from one ultrasonic transducer to the other, and the ultrasonic transducers being operable in the active state of the ultrasonic flow meter and inoperable in the passive state;

a clock (24) operable in both the active and passive states of the ultrasonic flow meter; and

a microprocessor (22) operable to switch the ultrasonic flow meter from the passive state to the active state at time intervals measured by the clock, the microprocessor further being operable to switch the ultrasonic flow meter from the active state to the passive state following completion of an ultrasonic flow measurement cycle;

a fast clock (26) connected to the microprocessor, the fast clock being operable in the active state of the ultrasonic flow meter and inoperable in the passive state;

a counter (38) operable to measure said transit times, the counter being clocked by the fast clock, the counter being operable in the active state of the ultrasonic flow meter and inoperable in the passive state;

a phase comparator (40) operable to provide a pulsing signal (S12) which rises on a rising or falling edge of the transmitted signal (S4) and falls on a rising or falling edge of the received signal (S11) such that the pulsing signal has a pulse width (w) which varies in dependence upon a phase difference between the transmitted and received signals, the phase comparator being operable in the active state of the ultrasonic flow meter and inoperable in the passive state;

a capacitor (44) operable to be charged by the pulsing signal; and

a reading device (46) operable to read a voltage on the capacitor, the reading device being operable in the active state of the ultrasonic flow meter and inoperable in the passive state;

wherein the microprocessor is operable to calculate the flow rate based at least partially upon the measured transit time as adjusted based on the read voltage.

17. The ultrasonic flow meter of claim 16 in which the microprocessor is operable to control a transmission time ($t_2$) and a duration ($T3$) of the transmitted signal such that said duration is less than said transit time.

18. The ultrasonic flow meter of claim 16 or claim 17further comprising an amplifier (36) operable to amplify at least a part of the received signal, a phase of the amplified signal being the same as a phase of the received signal, the amplifier being operable in the active state of the ultrasonic flow meter and inoperable in the passive state.

19. The ultrasonic flow meter of any of claims 16-18 further comprising a phase shifter (30) to adjust the phase of the transmitted signal before the transmitted signal is input into the phase comparator, the phase shifter being operable in the active state of the ultrasonic flow meter and inoperable in the passive state.

**Patentansprüche**

1. Verfahren einer Ultraschall-Strömungsmessung zum Messen einer Strömungsrate eines Fluids in einer Leitung, wobei das Verfahren umfasst:

Bereitstellen eines Ultraschall-Strömungsmessgeräts (20), welches einen Mikroprozessor (22), einen Taktgeber (24), einen schnellen Taktgeber (26) und ein Paar von Ultraschall-Transducern umfasst (32), welche betriebsfähig sind, Signale durch das Fluid bei einer Resonanzfrequenz der Transducer und bei einem Winkel ungleich 90° zu einer vorherrschenden Strömungsrichtung zu übertragen, wobei die Ultraschall-Transducer ferner betriebsfähig sind, die übertragenen Signale zu empfangen;

Schalten des Ultraschall-Strömungsmessgeräts von einem passiven Zustand zu einem aktiven Zustand zu von dem Taktgeber gemessenen Zeitintervallen, wobei eine von dem Ultraschall-Strömungsmessgerät in dem passiven Zustand verwendete Energiemenge niedriger als eine von dem Ultraschall-Strömungsmessgerät in dem aktiven Zustand verwendete Energiemenge ist;

Durchführen eines Ultraschall-Strömungsmessung-Zyklus, indem wenigstens ein Paar von Ultraschall-Strömungsmessungen ausgeführt wird, wobei ein Paar von Ultraschall-Strömungsmessungen eine stromaufwärtige Ultraschall-Strömungsmessung und eine stromabwärtige Ultraschall-Strömungsmessung umfasst und wobei das Ausführen einer Ultraschall-Strömungsmessung umfasst:

(a) Übertragen und Empfangen eines Ultraschallsignals, wobei das Ultraschallsignal eine zugeordnete Transitzeit aufweist, um sich von einem Ultraschall-Transducer zu dem anderen zu bewegen;
(b) Messen der Transitzeit mit einem durch den schnellen Taktgeber getakteten Zähler (38);

(c) Vergleichen der Phasen des übertragenen (S4) und des empfangenen (S11) Signals, indem ein pulsierendes Signal (S12) bereitgestellt wird, welches an einer ansteigenden oder abfallenden Flanke des übertragenen Signals ansteigt und an einer ansteigenden oder abfallenden Flanke des empfangenen Signals abfällt, so dass das pulsierende Signal eine Pulsbreite (w) aufweist, welche in Abhängigkeit einer Phasendifferenz zwischen dem übertragenen und dem empfangenen Signal variiert;

(d) Laden eines Kondensators (44) unter Verwendung des pulsierenden Signals;

(e) Messen einer Spannung an dem Kondensator; und

(f) Berechnen der Strömungsrate basierend wenigstens teilweise auf der gemessenen Transitzeit, wie sie basierend auf der gemessenen Spannung eingestellt ist; und

Schalten des Ultraschall-Strömungsmessgeräts von dem aktiven Zustand zu dem passiven Zustand auf eine Beendigung eines Ultraschall-Strömungsmessung-Zyklus folgend.

2. Verfahren nach Anspruch 1, wobei das Ausführen einer Ultraschall-Strömungsmessung vor dem Phasenvergleichsschritt ferner einen Schritt eines Verstärkens wenigstens eines Teils des empfangenen Signals umfasst, wobei eine Phase des verstärkten Signals die gleiche wie eine Phase des empfangenen Signals ist.

3. Verfahren nach Anspruch 1 oder Anspruch 2, wobei die Phase des übertragenen Signals vor dem Phasenvergleichsschritt derart eingestellt wird, dass ein Ergebnis des Phasenvergleichsschritts bei einer Strömungsrate von Null ungefähr 180° beträgt.

4. Verfahren nach jeglichem vorhergehenden Anspruch, wobei das Ausführen einer Ultraschall-Strömungsmessung ferner einen Schritt eines Entladens des Kondensators umfasst.

5. Verfahren nach jeglichem vorhergehenden Anspruch, wobei das Durchführen eines Ultraschall-Strömungsmessung-Zyklus ferner umfasst:

Berechnen einer Schallgeschwindigkeit in dem Fluid basierend wenigstens teilweise auf einer mittleren Transitzeit wenigstens eines Paars von Ultraschall-Strömungsmessungen; und

Berechnen der Strömungsrate basierend wenigstens teilweise auf der berechneten Schallgeschwindigkeit.

6. Verfahren nach jeglichem der Ansprüche 2 bis 5, wobei das Durchführen eines Ultraschall-Strömungsmessung-Zyklus umfasst:

Ausführen einer Mehrzahl von Paaren von Ultraschall-Strömungsmessungen;

Mitteln der Transitzeiten der Mehrzahl stromaufwärtiger Ultraschall-Strömungsmessungen, um eine mittlere stromaufwärtige Transitzeit bereitzustellen; und

Mitteln der Transitzeiten der Mehrzahl stromabwärtiger Ultraschall-Strömungsmessungen, um eine mittlere stromabwärtige Transitzeit bereitzustellen.

7. Verfahren nach jeglichem der Ansprüche 2 bis 5, wobei das Durchführen eines Ultraschall-Strömungsmessung-Zyklus umfasst:

Ausführen einer Mehrzahl von Paaren von Ultraschall-Strömungsmessungen;

Berechnen einer Mehrzahl von Strömungsraten, wobei jede berechnete Strömungsrate wenigstens teilweise auf einem jeweiligen Paar von Ultraschall-Strömungsmessungen basiert; und

Mitteln der Mehrzahl berechneter Strömungsraten, um eine mittlere Strömungsrate bereitzustellen.

8. Verfahren nach jeglichem vorhergehenden Anspruch, ferner umfassend einen Testmessungsschritt, in welchem eine phasenverschobene Version des übertragenen Signals als das empfangene Signal verwendet wird.

9. Verfahren nach jeglichem vorhergehenden Anspruch, ferner umfassend einen Testschritt für den schnellen Taktgeber.

10. Verfahren nach jeglichem vorhergehenden Anspruch, ferner umfassend die folgenden Schritte:

Messen einer Amplitude des empfangenen Signals; und

Erhöhen einer Länge des Zeitintervalls, wenn die gemessene Amplitude für eine vorbestimmte Anzahl von Messungen unterhalb eines vorbestimmten Schwellenwerts liegt.

11. Verfahren nach jeglichem vorhergehenden Anspruch, ferner umfassend ein Bereitstellen zusätzlicher Paare von Ultraschall-Transducern, welche betriebsfähig sind, Signale durch das Fluid zu übertragen und die übertragenen Signale zu empfangen.

12. Verfahren nach jeglichem vorhergehenden Anspruch, wobei die Zeitspanne, welche benötigt wird, um einen Ultraschall-Strömungsmessung-Zyklus zu beenden, zwischen etwa 20 μs und etwa 200 μs liegt und das Zeitintervall zwischen etwa 1 ms und 100 ms liegt.

13. Verfahren nach jeglichem vorhergehenden Anspruch, wobei das Intervall kleiner als ein erwarteter Zeitrahmen für eine signifikante Änderung der Strömungsrate ist.

14. Verfahren nach jeglichem vorhergehenden Anspruch, wobei die von dem Ultraschall-Strömungsmessgerät in dem passiven Zustand verwendete Energiemenge wenigstens 100-mal kleiner als die in dem aktiven Zustand verwendete Energiemenge ist.

15. Verfahren nach jeglichem vorhergehenden Anspruch, wobei die von dem Ultraschall-Strömungsmessgerät in dem passiven Zustand verwendete Energiemenge niedriger als etwa 100 μW ist und die in dem aktiven Zustand verwendete Energiemenge zwischen etwa 10 mW und etwa 100 mW liegt.

16. Ultraschall-Strömungsmessgerät (20) zum Messen einer Strömungsrate eines Fluids in einer Leitung, wobei das Ultraschall- Strömungsmessgerät einen aktiven Zustand, in welchem Ultraschall-Strömungsmessung-Zyklen durchgeführt werden, und einen passiven Zustand aufweist, wobei eine von dem Ultraschall-Strömungsmessgerät in dem passiven Zustand verwendete Energiemenge niedriger als eine von dem Ultraschall-Strömungsmessgerät in dem aktiven Zustand verwendete Energiemenge ist, wobei das Ultraschall-Strömungsmessgerät umfasst:

ein Paar von Ultraschall-Transducern (32), welche betriebsfähig sind, Signale durch das Fluid bei einer Resonanzfrequenz der Transducer und bei einem Winkel ungleich 90° zu einer vorherrschenden Strömungsrichtung zu übertragen, wobei die Ultraschall-Transducer ferner betriebsfähig sind, die übertragenen Signale zu empfangen, wobei die Signale zugeordnete Transitzeiten aufweisen, um sich von einem Ultraschall-Transducer zu dem anderen zu bewegen, und die Ultraschall-Transducer in dem aktiven Zustand des Ultraschall-Strömungsmessgeräts betriebsfähig sind und in dem passiven Zustand nicht betriebsfähig sind;
einen Taktgeber (24), welcher sowohl in dem aktiven als auch in dem passiven Zustand des Ultraschall-Strömungsmessgeräts betriebsfähig ist; und
einen Mikroprozessor (22), welcher betriebsfähig ist, das Ultraschall-Strömungsmessgerät zu von dem Taktgeber gemessenen Zeitintervallen von dem passiven Zustand zu dem aktiven Zustand zu schalten, wobei der Mikroprozessor ferner betriebsfähig ist, das Ultraschall-Strömungsmessgerät auf eine Beendigung eines Ultraschall-Strömungsmessung-Zyklus folgend von dem aktiven Zustand zu dem passiven Zustand zu schalten;
einen schnellen Taktgeber (26), welcher mit dem Mikroprozessor verbunden ist, wobei der schnelle Taktgeber in dem aktiven Zustand des Ultraschall-Strömungsmessgeräts betriebsfähig ist und in dem passiven Zustand nicht betriebsfähig ist;
einen Zähler (38), welcher betriebsfähig ist, die Transitzeiten zu messen, wobei der Zähler durch den schnellen Taktgeber getaktet ist, wobei der Zähler in dem aktiven Zustand des Ultraschall-Strömungsmessgeräts betriebsfähig ist und in dem passiven Zustand nicht betriebsfähig ist;
einen Phasenvergleicher (40), welcher betriebsfähig ist, ein pulsierendes Signal (S12) bereitzustellen, welches an einer ansteigenden oder abfallenden Flanke des übertragenen Signals (S4) ansteigt und an einer ansteigenden oder abfallenden Flanke des empfangenen Signals (S11) abfällt, so dass das pulsierende Signal eine Pulsbreite (w) aufweist, welche in Abhängigkeit einer Phasendifferenz zwischen dem übertragenen und dem empfangenen Signal variiert, wobei der Phasenvergleicher in dem aktiven Zustand des Ultraschall-Strömungsmessgeräts betriebsfähig ist und in dem passiven Zustand nicht betriebsfähig ist;
einen Kondensator (44), welcher betriebsfähig ist, durch das pulsierende Signal geladen zu werden; und
eine Lesevorrichtung (46), welche betriebsfähig ist, eine Spannung an dem Kondensator zu lesen, wobei die Lesevorrichtung in dem aktiven Zustand des Ultraschall-Strömungsmessgeräts betriebsfähig ist und in dem passiven Zustand nicht betriebsfähig ist;
wobei der Mikroprozessor betriebsfähig ist, die Strömungsrate basierend wenigstens teilweise auf der gemessen Transitzeit zu berechnen, wie sie basierend auf der gelesenen Spannung eingestellt ist.

**17.** Ultraschall-Strömungsmessgerät nach Anspruch 16, wobei der Mikroprozessor betriebsfähig ist, eine Übertragungszeit ($t_2$) und eine Dauer (T3) des übertragenen Signals derart zu steuern/regeln, dass die Dauer kürzer als die Transitzeit ist.

**18.** Ultraschall-Strömungsmessgerät nach Anspruch 16 oder Anspruch 17, ferner umfassend einen Verstärker (36), welcher betriebsfähig ist, wenigstens einen Teil des empfangenen Signals zu verstärken, wobei eine Phase des verstärkten Signals die gleiche wie eine Phase des empfangenen Signals ist, wobei der Verstärker in dem aktiven Zustand des Ultraschall-Strömungsmessgeräts betriebsfähig ist und in dem passiven Zustand nicht betriebsfähig ist.

**19.** Ultraschall-Strömungsmessgerät nach jeglichem der Ansprüche 16-18, ferner umfassend einen Phasenschieber (30), um die Phase des übertragenen Signals einzustellen, bevor das übertragenen Signal in den Phasenvergleicher eingegeben wird, wobei der Phasenschieber in dem aktiven Zustand des Ultraschall-Strömungsmessgeräts betriebsfähig ist und in dem passiven Zustand nicht betriebsfähig ist.

**Revendications**

**1.** Procédé de mesure d'écoulement ultrasonore pour mesurer un débit d'écoulement d'un fluide dans un conduit, le procédé comprenant les étapes consistant à :

fournir un débitmètre ultrasonore (20) comprenant un microprocesseur (22), une horloge (24), une horloge rapide (26), et une paire de transducteurs ultrasonores (32) pouvant fonctionner pour transmettre des signaux à travers le fluide à une fréquence de résonance des transducteurs et à un angle autre que 90 degrés par rapport à une direction d'écoulement prédominante, les transducteurs ultrasonores pouvant en outre fonctionner pour recevoir les signaux transmis ;
commuter le débitmètre ultrasonore d'un état passif à un état actif à des intervalles de temps mesurés par l'horloge, une quantité de puissance utilisée par le débitmètre ultrasonore dans l'état passif étant inférieure à une quantité de puissance utilisée par le débitmètre ultrasonore dans l'état actif ;
effectuer un cycle de mesures d'écoulement ultrasonores en effectuant au moins une paire de mesures d'écoulement ultrasonores, dans lequel une paire de mesures d'écoulement ultrasonores comprend une mesure d'écoulement ultrasonore en amont et une mesure d'écoulement ultrasonore en aval, et dans lequel la réalisation d'une mesure d'écoulement ultrasonore comprend les étapes consistant à :

(a) transmettre et recevoir un signal ultrasonore, le signal ultrasonore ayant un temps de transit associé pour un déplacement d'un transducteur ultrasonore à l'autre ;
(b) mesurer le temps de transit à l'aide d'un compteur (38) cadencé par l'horloge rapide ;
(c) comparer les phases des signaux transmis (S4) et reçu (*S11*) en fournissant un signal pulsé (S12) qui monte sur un front montant ou descendant du signal transmis et tombe sur un front montant ou descendant du signal reçu de sorte que le signal pulsé présente une largeur d'impulsion (*w*) qui varie en fonction d'une différence de phase entre les signaux transmis et reçu ;
(d) charger un condensateur (44) en utilisant le signal puisé ;
(e) mesurer une tension sur le condensateur ; et
(f) calculer le débit d'écoulement sur la base au moins partiellement du temps de transit mesuré tel qu'ajusté sur la base de la tension mesurée ; et

commuter le débitmètre ultrasonore de l'état actif à l'état passif après l'achèvement d'un cycle de mesures d'écoulement ultrasonore.

**2.** Procédé selon la revendication 1, dans lequel la réalisation d'une mesure d'écoulement ultrasonore comprend en outre une étape consistant à amplifier au moins une partie du signal reçu avant l'étape de comparaison de phase, une phase du signal amplifié étant identique à une phase du signal reçu.

**3.** Procédé selon la revendication 1 ou la revendication 2, dans lequel la phase du signal transmis est ajustée avant l'étape de comparaison de phase, de sorte qu'un résultat de l'étape de comparaison de phase est d'environ 180° à un débit d'écoulement nul.

**4.** Procédé selon l'une quelconque des revendications précédentes, dans lequel la réalisation d'une mesure d'écoulement ultrasonore comprend en outre une étape de décharge du condensateur.

**5.** Procédé selon l'une quelconque des revendications précédentes, dans lequel la réalisation d'un cycle de mesures d'écoulement ultrasonores comprend en outre les étapes consistant à :

calculer une vitesse sonore dans le fluide sur la base au moins partiellement d'un temps de transit moyen d'au moins une paire de mesures d'écoulement ultrasonores ; et
calculer le débit d'écoulement en fonction au moins partiellement de la vitesse sonore calculée.

**6.** Procédé selon l'une quelconque des revendications 2 à 5, dans lequel la réalisation d'un cycle de mesures de d'écoulement ultrasonores comprend les étapes consistant à :

réaliser une pluralité de paires de mesures d'écoulement ultrasonores ;
calculer la moyenne des temps de transit de la pluralité de mesures d'écoulement ultrasonores en amont pour fournir un temps de transit en amont moyen ; et
calculer la moyenne des temps de transit de la pluralité de mesures d'écoulement ultrasonores en aval pour fournir un temps de transit moyen en aval.

**7.** Procédé selon l'une quelconque des revendications 2 à 5, dans lequel la réalisation d'un cycle de mesures de d'écoulement ultrasonores comprend les étapes consistant à :

réaliser une pluralité de paires de mesures d'écoulement ultrasonores ;
calculer une pluralité de débits d'écoulement, chaque débit d'écoulement calculé étant basé au moins partiellement sur une paire respective de mesures d'écoulement ultrasonores ; et
calculer la moyenne de la pluralité de débits d'écoulement calculés pour fournir un débit d'écoulement moyen.

**8.** Procédé selon l'une quelconque des revendications précédentes, comprenant en outre une étape de mesure de test dans laquelle une version déphasée du signal transmis est utilisée en tant que signal reçu.

**9.** Procédé selon l'une quelconque des revendications précédentes, comprenant en outre une étape de test d'horloge rapide.

**10.** Procédé selon l'une quelconque des revendications précédentes, comprenant en outre les étapes consistant à :

mesurer une amplitude du signal reçu ; et
augmenter une longueur dudit intervalle de temps si l'amplitude mesurée est inférieure à un seuil prédéterminé pour un nombre prédéterminé de mesures.

**11.** Procédé selon l'une quelconque des revendications précédentes, comprenant en outre la fourniture de paires supplémentaires de transducteurs ultrasonores pouvant fonctionner pour transmettre des signaux à travers le fluide et pour recevoir les signaux transmis.

**12.** Procédé selon l'une quelconque des revendications précédentes, dans lequel la période de temps nécessaire pour terminer un cycle de mesures d'écoulement ultrasonores est comprise entre environ 20 $\mu$s et 200 $\mu$s et ledit intervalle de temps est compris entre environ 1 ms et 100 ms.

**13.** Procédé selon l'une quelconque des revendications précédentes, dans lequel ledit intervalle est inférieur à une échelle de temps attendue pour un changement significatif du débit d'écoulement.

**14.** Procédé selon l'une quelconque des revendications précédentes, dans lequel la quantité de puissance utilisée par le débitmètre ultrasonore à l'état passif est au moins cent fois inférieure à la quantité de puissance utilisée à l'état actif.

**15.** Procédé selon l'une quelconque des revendications précédentes, dans lequel la quantité de puissance utilisée par le débitmètre ultrasonore à l'état passif est inférieure à environ 100 $\mu$W et la quantité de puissance utilisée à l'état actif est comprise entre environ 10 mW et 100 mW.

**16.** Débitmètre ultrasonore (20) pour mesurer un débit d'écoulement d'un fluide dans un conduit, le débitmètre ultrasonore ayant un état actif dans lequel des cycles de mesures d'écoulement ultrasonores sont réalisés et un état passif, une quantité de puissance utilisé par le débitmètre ultrasonore à l'état passif étant inférieure à une quantité de puissance utilisée par le débitmètre ultrasonore à l'état actif, le débitmètre ultrasonore comprenant :

une paire de transducteurs ultrasonore (32) pouvant fonctionner pour transmettre des signaux à travers le fluide à une fréquence de résonance des transducteurs et à un angle autre que 90 degrés par rapport à une direction d'écoulement prédominante, les transducteurs ultrasonore pouvant en outre fonctionner pour recevoir des signaux transmis, les signaux ayant des temps de transit associés pour un déplacement d'un transducteur ultrasonore à l'autre, et les transducteurs ultrasonores pouvant fonctionner dans l'état actif du débitmètre ultrasonore et ne pouvant pas fonctionner dans l'état passif ;

une horloge (24) pouvant fonctionner dans les états actif et passif du débitmètre ultrasonore ; et

un microprocesseur (22) pouvant pour commuter le débitmètre ultrasonore de l'état passif à l'état actif à des intervalles de temps mesurés par l'horloge, le microprocesseur pouvant en outre fonctionner pour commuter le débitmètre ultrasonore de l'état actif à l'état passif après l'achèvement d'un cycle de mesures d'écoulement ultrasonores ;

une horloge rapide (26) connectée au microprocesseur, l'horloge rapide pouvant fonctionner dans l'état actif du débitmètre ultrasonore et ne pouvant pas fonctionner dans l'état passif ;

un compteur (38) pouvant fonctionner pour mesurer lesdits temps de transit, le compteur étant cadencé par l'horloge rapide, le compteur pouvant fonctionner dans l'état actif du débitmètre ultrasonore et ne pouvant pas fonctionner dans l'état passif ;

un comparateur de phase (40) pouvant fonctionner pour fournir un signal pulsé (*S12*) qui monte sur un front montant ou descendant du signal transmis (*S4*) et tombe sur un front montant ou descendant du signal reçu (*S11*) de telle sorte que le signal pulsé a une largeur d'impulsion (w) qui varie en fonction d'une différence de phase entre les signaux transmis et reçu, le comparateur de phase pouvant fonctionner dans l'état actif du débitmètre ultrasonore et ne pouvant pas fonctionner dans l'état passif ;

un condensateur (44) pouvant fonctionner pour être chargé par le signal puisé ; et

un dispositif de lecture (46) pouvant fonctionner pour lire une tension sur le condensateur, le dispositif de lecture pouvant fonctionner dans l'état actif du débitmètre ultrasonore et ne pouvant pas fonctionner dans l'état passif ;

dans lequel le microprocesseur peut fonctionner pour calculer le débit d'écoulement en se basant au moins partiellement sur le temps de transit mesuré, tel qu'ajusté sur la base de la tension de lecture.

17. Débitmètre ultrasonore selon la revendication 16, dans lequel le microprocesseur peut fonctionner pour commander un temps de transmission (*t2*) et une durée (*T3*) du signal transmis de sorte que ladite durée soit inférieure audit temps de transit.

18. Débitmètre ultrasonore selon la revendication 16 ou la revendication 17, comprenant en outre un amplificateur (36) pouvant fonctionner pour amplifier au moins une partie du signal reçu, une phase du signal amplifié étant identique à une phase du signal reçu, l'amplificateur pouvant fonctionner dans l'état actif du débitmètre ultrasonore et ne pouvant pas fonctionner dans l'état passif.

19. Débitmètre ultrasonore selon l'une quelconque des revendications 16 à 18, comprenant en outre un déphaseur (30) pour ajuster la phase du signal transmis avant que le signal transmis ne soit entré dans le comparateur de phase, le déphaseur pouvant fonctionner dans l'état actif du débitmètre ultrasonore et ne pouvant pas fonctionner l'état passif.

Figure 1

Figure 2

EP 1 913 342 B1

EP 1 913 342 B1

Figure 3

17

## Figure 4a

## Figure 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2266373 A